# EUROPÄISCHE PATENTANMELDUNG

(11) **EP 4 571 063 A1**
(43) Veröffentlichungstag der Anmeldung: **18.06.2025**
(21) Anmeldenummer: 24213471.6
(22) Anmeldetag: 18.11.2024
(51) Int. Cl.: F01N 3/025, F01N 3/20, F01N 3/36, F01N 9/00, F01N 13/00

(54) **KATALYTISCHER HEIZER FÜR EINE ABGASANLAGE EINER BRENNKRAFTMASCHINE, ABGASANLAGE UND VERFAHREN ZUM BETREIBEN EINER ABGASANLAGE**

(30) Priorität: 15.12.2023 DE 102023135267
(71) Anmelder: Purem GmbH, 66539 Neunkirchen (DE)
(72) Erfinder: Gaiser, Gerd, Reutlingen (DE); Weller, Bernd, Durlangen (DE); Lehr, Tobias, Esslingen (DE)
(74) Vertreter: Ruttensperger Lachnit Trossin Gomoll

(57) **Zusammenfassung**

Ein katalytischer Heizer für eine Abgasanlage einer Brennkraftmaschine umfasst wenigstens ein elektrisch erregbares Heizelement (14), eine Kohlenwasserstoff-Abgabeanordnung (20) zur Abgabe von flüssigem Kohlenwasserstoff (K) auf das wenigstens eine elektrisch erregbare Heizelement (14) zu und eine Oxidationskatalysatoranordnung (26) zur Oxidation von an dem wenigstens einen elektrisch erregbaren Heizelement (14) erwärmtem Kohlenwasserstoff (K).

## Beschreibung

Die vorliegende Erfindung betrifft einen katalytischen Heizer für eine Abgasanlage einer Brennkraftmaschine beispielsweise in einem Fahrzeug sowie eine mit einem derartigen katalytischen Heizer ausgestattete Abgasanlage und ein Verfahren zum Betreiben einer derartigen Abgasanlage.

Um bei der Inbetriebnahme einer Brennkraftmaschine in einem Fahrzeug die Zeitdauer, während welcher aufgrund zu niedriger Temperatur von in einer Abgasanlage vorgesehenen Abgasbehandlungsbaugruppen, wie zum Beispiel Katalysatoren, der Schadstoffgehalt im Abgas der Brennkraftmaschine im Wesentlichen nicht reduziert werden kann, ist es bekannt, einen elektrischen Heizer einzusetzen, welcher bei Anlegen einer elektrischen Spannung Wärme generiert und diese auf das von der Brennkraftmaschine ausgestoßene Abgas überträgt. Das auf diese Weise weiter erwärmte Abgas führt zu einer schnelleren Erwärmung der stromabwärts eines derartigen Heizers positionierten Abgasbehandlungsbaugruppen und damit einer Verkürzung der Zeitdauer bis zum Beginn einer effizienten Abgasbehandlung nach Inbetriebnahme der Brennkraftmaschine.

Es ist die Aufgabe der vorliegenden Erfindung, einen Heizer für eine Abgasanlage einer Brennkraftmaschine, eine mit einem derartigen Heizer ausgestattete Abgasanlage sowie ein Verfahren zum Betreiben einer derartigen Abgasanlage vorzusehen, mit welchen bei reduziertem Energieeinsatz eine effiziente Erwärmung von Komponenten der Abgasanlage erreicht wird.

Gemäß einem ersten Aspekt der vorliegenden Erfindung wird diese Aufgabe gelöst durch einen katalytischer Heizer für eine Abgasanlage einer Brennkraftmaschine, umfassend:
- wenigstens ein elektrisch erregbares Heizelement,
- eine Kohlenwasserstoff-Abgabeanordnung zur Abgabe von flüssigem Kohlenwasserstoff auf das wenigstens eine elektrisch erregbare Heizelement zu,
- eine Oxidationskatalysatoranordnung zur Oxidation von an dem wenigstens einen elektrisch erregbaren Heizelement erwärmtem Kohlenwasserstoff.

Mit dem erfindungsgemäß aufgebauten katalytischen Heizer wird es möglich, einen Großteil der auf das in einer Abgasanlage strömende Abgas bzw. auf Komponenten der Abgasanlage zu übertragenden Wärme nicht durch die elektrische Erregung des wenigstens einen Heizelements zu generieren, sondern durch die katalytische Oxidation und die dabei freigesetzte Energie. Dies führt einerseits zu einer Entlastung eines Bordspannungssystem eines Fahrzeugs und bewirkt andererseits eine deutlich schnellere und stärkere Erwärmung der für einen Betrieb einer Brennkraftmaschine bzw. einer Abgasanlage zu konditionierenden Systembereiche, wie zum Beispiel Katalysatoren.

Um eine große Oberfläche für die in dem katalytischen Heizer durchzuführende katalytische Oxidation des Kohlenwasserstoffs bereitstellen zu können, kann die Oxidationskatalysatoranordnung einen an einer Abströmseite des wenigstens einen elektrisch erregbaren Heizelements angeordneten Oxidationskatalysatorblock zur Aufnahme und Oxidation von an dem wenigstens einen elektrisch erregbaren Heizelement verdampftem Kohlenwasserstoff umfassen.

Für eine effiziente Ausnutzung der an dem wenigstens einen elektrisch erregbaren Heizelement freigesetzten Wärme wird vorgeschlagen, dass die Oxidationskatalysatoranordnung eine Oxidationskatalysatormaterialbeschichtung des wenigstens einen elektrisch erregbaren Heizelements umfasst. Die Oxidationskatalysatormaterialbeschichtung kann somit durch direkten körperlichen Kontakt und die dadurch ermöglichte Wärmeleitung auch bei vergleichsweise niedrigen Umgebungstemperaturen sehr schnell auf eine für die Durchführung einer katalytischen Oxidation des Kohlenwasserstoffs erforderliche Betriebstemperatur gebracht werden.

Gemäß einem weiteren Aspekt der vorliegenden Erfindung wird die Aufgabe gelöst durch eine Abgasanlage für eine Brennkraftmaschine, umfassend wenigstens eine Abgasbehandlungsbaugruppe und bezüglich einer Abgasströmungsrichtung stromaufwärts der wenigstens einen Abgasbehandlungsbaugruppe einen katalytischen Heizer mit erfindungsgemäßem Aufbau.

Die wenigstens eine Abgasbehandlungsbaugruppe kann eine erste Abgasbehandlungsbaugruppe mit einem Oxidationskatalysator oder/und einem Partikelfilter umfassen. Je nach Art der in Verbindung mit der Abgasanlage eingesetzten Brennkraftmaschine, also Diesel-Motor oder Otto-Motor, und damit auch der Art des in dem katalytischen Heizer verwendeten Kohlenwasserstoffs kann der Oxidationskatalysator entweder als Diesel-Oxidationskatalysator oder als Dreiwegekatalysator ausgebildet sein.

Für eine noch effizientere Abgasreinigung kann insbesondere bei Ausgestaltung der Brennkraftmaschine als Diesel-Motor die wenigstens eine Abgasbehandlungsbaugruppe eine zweite Abgasbehandlungsbaugruppe mit einem SCR-Katalysator umfassen.

Dabei kann die erste Abgasbehandlungsbaugruppe in der Abgasströmungsrichtung stromaufwärts bezüglich der zweiten Abgasbehandlungsbaugruppe angeordnet sein.

Der katalytische Heizer kann in der Abgasströmungsrichtung beispielsweise stromabwärts eines Abgasturboladers angeordnet sein. Eine verstärkte Minderung des Stickoxidanteils in dem aus der Brennkraftmaschine ausgestoßenen Abgas kann erreicht werden, wenn der katalytische Heizer in der Abgasströmungsrichtung stromabwärts einer dritten Abgasbehandlungsbaugruppe angeordnet ist und beispielsweise die dritte Abgasbehandlungsbaugruppe einen SCR-Katalysator umfasst.

Um dann, wenn bei ausreichend erwärmter Abgasanlage das Betreiben des katalytischen Heizers nicht mehr erforderlich ist, einen durch diesen unvermeidbar eingeführten erhöhten Strömungswiderstand der Abgasanlage zu kompensieren, wird vorgeschlagen, dass parallel zu dem katalytischen Heizer ein wahlweise absperrbarer Bypass-Strömungsweg vorgesehen ist.

Abhängig von der Art eines Fahrzeugs, in welches die Abgasanlage zu integrieren ist,
- kann der katalytische Heizer in einem von einer Brennkraftmaschine in einer Höhenrichtung nach unten oder/und seitlich weg verlaufend zu positionierenden Abgasanlagenabschnitt angeordnet sein,
   oder
- kann der katalytische Heizer in einem unter einem Unterboden eines Fahrzeugs verlaufend oder in einem seitlichen Bereich eines Fahrzeugs zu positionierenden Abgasanlagenabschnitt angeordnet sein.

Gemäß einem weiteren Aspekt der vorliegenden Erfindung wird die eingangs angegebene Aufgabe gelöst durch ein Verfahren zum Betreiben einer erfindungsgemäß aufgebauten Abgasanlage, bei welchem Verfahren das wenigstens eine elektrisch erregbare Heizelement des katalytischen Heizers derart betrieben wird, dass auf eine Oberfläche des wenigstens einen elektrisch erregbaren Heizelements auftreffender flüssiger Kohlenwasserstoff erwärmt wird und an der Oxidationskatalysatoranordnung zur Erzeugung von Wärme oxidiert wird.

Um zu gewährleisten, dass der in Richtung auf das wenigstens eine elektrisch erregbare Heizelement zu eingespritzte Kohlenwasserstoff im Wesentlichen vollständig durch die katalytische Oxidation umgesetzt wird und daher der Ausstoß von nicht oxidiertem Kohlenwasserstoff zur Umgebung vermieden wird, wird vorgeschlagen, dass dann, wenn nach dem Beginn des Erregens des wenigstens einen elektrisch erregbaren Heizelements die Oxidationskatalysatoranordnung eine vorbestimmte Temperatur, vorzugsweise eine die katalytische Oxidation von Kohlenwasserstoff an der Oxidationskatalysatoranordnung zulassende Temperatur, aufweist oder/und seit dem Beginn des Erregens des wenigstens einen elektrisch erregbaren Heizelements eine vorbestimmte Zeitdauer vergangen ist, das Einspritzen von Kohlenwasserstoff auf das wenigstens eine elektrisch erregbare Heizelement zu gestartet wird.

Die Zeitdauer, während welcher das von einer Brennkraftmaschine ausgestoßene Abgas in der Abgasanlage nicht bzw. nicht effizient zur Verminderung des Schadstoffanteils behandelt werden kann, kann beispielsweise weiter verkürzt werden, wenn das Erregen des wenigstens einen elektrisch erregbaren Heizelements vor Inbetriebnahme einer Brennkraftmaschine gestartet wird.

Wenn bei dem erfindungsgemäßen Verfahren das Einspritzen von Kohlenwasserstoff auf das wenigstens eine elektrisch erregbare Heizelement mit oder nach der Inbetriebnahme der Brennkraftmaschine gestartet wird, ist gewährleistet, dass an dem wenigstens einen elektrisch erregbaren Heizelement verdampfter Kohlenwasserstoff durch das dann bereits in der Abgasanlage strömende Abgas beispielsweise zu dem stromabwärts folgenden Oxidationskatalysatorblock transportiert wird.

Bei einer alternativen Vorgehensweise kann das Einspritzen von Kohlenwasserstoff auf das wenigstens eine elektrisch erregbare Heizelement zu bereits vor der Inbetriebnahme der Brennkraftmaschine gestartet werden. Diese Vorgehensweise führt dann zu einer besonders schnellen und effizienten Erwärmung, wenn an dem wenigstens einen elektrisch erregbaren Heizelement die Oxidationskatalysatormaterialbeschichtung vorgesehen ist und daher bereits unmittelbar an dem so beschichteten Heizelement durch die Oxidation des erwärmten Kohlenwasserstoffs Wärme freigesetzt wird.

Dabei kann für eine effiziente Erwärmung vorgesehen sein, dass:
a) vor der Inbetriebnahme der Brennkraftmaschine in einem Vor-Einspritzvorgang Kohlenwasserstoff mit einer vorbestimmten Menge oder/ und für eine vorbestimmte Zeitdauer eingespritzt wird,
b) nach Beenden des Vor-Einspritzvorgangs die Brennkraftmaschine ohne Zündung zur Drehung angetrieben wird,
c) vor der Inbetriebnahme der Brennkraftmaschine in einem letzten Vor-Einspritzvorgang Kohlenwasserstoff mit einer vorbestimmten Menge oder/ und für eine vorbestimmte Zeitdauer eingespritzt wird.

Das zwischenzeitliche Drehen der Brennkraftmaschine, also ein Bewegen der Kurbelwelle und der Kolben derselben ohne dass in den Zylindern eine Zündung erzeugt wird, führt dazu, dass Luft und damit Sauerstoff in die Abgasanlage transportiert wird, um in einem dann folgenden weiteren Vor-Einspritzvorgang Sauerstoff für die Oxidation des Kohlenwasserstoffs zur Verfügung zu stellen.

Vor Durchführung der Maßnahme c) können die Maßnahmen a) und b) wenigstens einmal wiederholt werden. Da mit der Maßnahme c) der letzte Vor-Einspritzvorgang durchgeführt wird, kann nach oder während der Durchführung der Maßnahme c) die Brennkraftmaschine in Betrieb genommen werden.

Hat die mehrfache Wiederholung derartiger Vor-Einspritzvorgänge bereits zu einer ausreichenden Erwärmung der Abgasanlage geführt, kann mit der Beendigung der Maßnahme c) das Einspritzen von Kohlenwasserstoff beendet werden. Beispielsweise bei vergleichsweise niedrigen Umgebungstemperaturen und dementsprechend kalter Abgasanlage kann es für eine ausreichende und schnelle Erwärmung der Abgasanlage vorteilhaft sein, wenn nach der Beendigung der Maßnahme c) und nach der Inbetriebnahme der Brennkraftmaschine das Einspritzen von Kohlenwasserstoff wieder aufgenommen oder fortgesetzt wird. Dies bedeutet, dass beispielsweise mit der Beendigung der Maßnahme c) das Einspritzen von Kohlenwasserstoff bei dann betriebener Brennkraftmaschine ohne Unterbrechung fortgesetzt werden kann, oder dass nach Beendigung der Maßnahme c) das Einspritzen von Kohlenwasserstoff kurzzeitig unterbrochen wird und dann, wenn festgestellt wird, dass beispielsweise verschiedene Systembereiche der Abgasanlage noch nicht ausreichend erwärmt sind, wieder begonnen wird, Kohlenwasserstoff einzuspritzen und durch dessen katalytische Oxidation Wärme freizusetzen.

Um zu gewährleisten, dass der eingespritzte Kohlenwasserstoff an der Oxidationskatalysatoranordnung im Wesentlichen vollständig zur Freisetzung von Wärme umgesetzt werden kann, kann die Kohlenwasserstoff-Einspritzrate in Abhängigkeit einer Temperatur der Oxidationskatalysatoranordnung oder/und in Abhängigkeit eines Abgasvolumenstroms in der Abgasanlage bestimmt werden. Je höher die Temperatur der Oxidationskatalysatoranordnung ist, desto effizienter kann diese den Kohlenwasserstoff umsetzen, so dass mit zunehmender Temperatur der Oxidationskatalysatoranordnung die Möglichkeit besteht, durch Erhöhen der Kohlenwasserstoff-Einspritzrate auch die pro Zeiteinheit freigesetzte Energiemenge zu erhöhen. Ein höherer Abgasvolumenstrom bedeutet eine höhere Strömungsgeschwindigkeit und entsprechend auch eine geringere Verweilzeit bzw. auch eine geringere Wahrscheinlichkeit, dass in dem Abgasstrom transportierter, verdampfter Kohlenwasserstoff in Kontakt mit der Oberfläche der Oxidationskatalysatoranordnung tritt und dort oxidiert wird. Daher ist es vorteilhaft, mit größerem Abgasvolumenstrom die Menge des pro Zeiteinheit eingespritzten Kohlenwasserstoffs zu verringern, um das Ausstoßen von nicht oxidiertem Kohlenwasserstoff zu vermeiden. Beispielsweise können derartige Größen, wie die Temperatur der Oxidationskatalysatoranordnung, beispielsweise auch in verschiedenen Bereichen derselben, und der Abgasvolumenstrom in einem die Kohlenwasserstoff-Einspritzrate definierenden Kennfeld als Eingangsgrößen berücksichtigt werden.

Dabei kann insbesondere vorgesehen sein, dass mit zunehmender Temperatur der Oxidationskatalysatoranordnung die Kohlenwasserstoff-Einspritzrate zunimmt, oder/ und dass mit zunehmendem Abgasvolumenstrom die Kohlenwasserstoff-Einspritzrate abnimmt.

Die vorliegende Erfindung wird nachfolgend mit Bezug auf die beiliegenden Figuren detailliert beschrieben. Es zeigt:
- Fig. 1: eine Längsschnittansicht eines katalytischen Heizers für eine Abgasanlage einer Brennkraftmaschine;
- Fig. 2: eine prinzipartige Darstellung einer das von einer Brennkraftmaschine ausgestoßene Abgas aufnehmenden Abgasanlage;
- Fig. 3: eine weitere prinzipartige Darstellung einer Abgasanlage;
- Fig. 4: eine weitere prinzipartige Darstellung einer Abgasanlage.

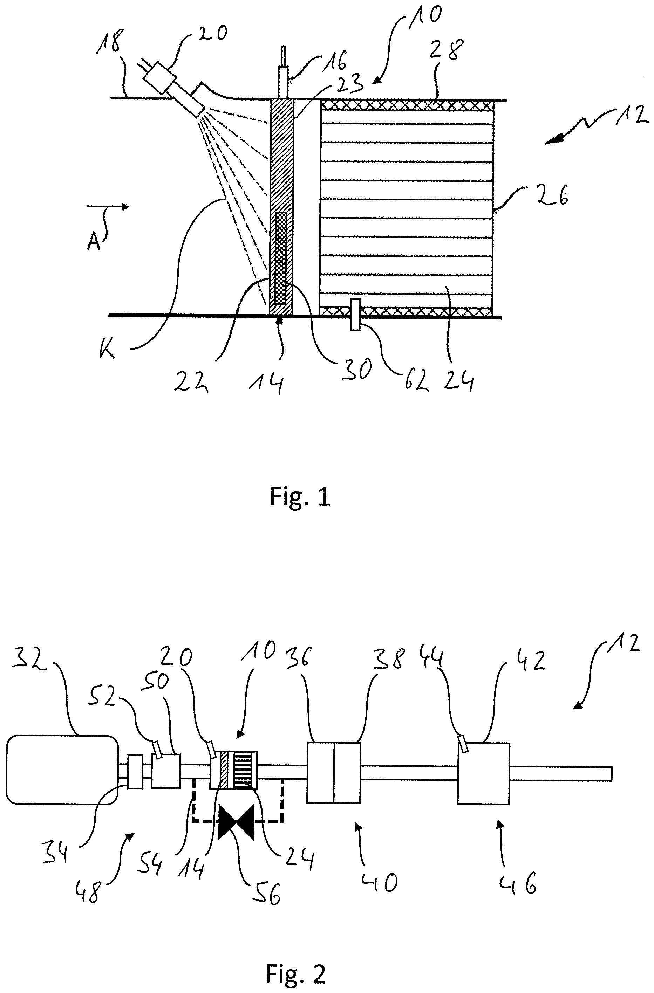

Die Fig. 1 zeigt in einem prinzipartigen Längsschnitt einen allgemein mit 10 bezeichneten katalytischen Heizer in einer Abgasanlage 12 für eine Brennkraftmaschine.

Der katalytische Heizer 10 umfasst als wesentlichen Bestandteil ein elektrisch erregbares Heizelement 14, welches über Anschlusskontakte 16 mit einer Spannungsquelle, beispielsweise einem Bordspannungssystem eines Fahrzeugs, verbunden werden kann. Das elektrisch erregbare Heizelement 14 kann als Heizleiter aus bandartigem Flachmaterial, als Mantelheizer oder dergleichen ausgebildet sein und kann beispielsweise mit spiralartiger Windungsstruktur, mäanderartiger Windungsstruktur oder in anderer Weise gewunden so angeordnet sein, dass in einer beispielsweise rohrartigen Abgasführungskomponente 18 auf dieses zu strömendes Abgas A das Heizelement 14 umströmen und dabei Wärme aufnehmen kann. Stromaufwärts des Heizelements 14 ist eine allgemein auch als Injektor bezeichnete Kohlenwasserstoff-Abgabeanordnung 20 positioniert. Diese gibt flüssigen Kohlenwasserstoff K, zum Beispiel Diesel oder Benzin, beispielsweise in Sprayform bzw. in Tröpfchenform in Richtung auf eine Anströmseite 22 des elektrisch erregbaren Heizelements 14 zu ab.

An einer Abströmseite 23 des Heizelements 14 ist ein Oxidationskatalysatorblock 24 einer allgemein mit 26 bezeichneten Oxidationskatalysatoranordnung beispielsweise durch eine Fasermatte 28 oder dergleichen in der Abgasführungskomponente 18 getragen. Der Oxidationskatalysatorblock 24 ist beispielsweise mit einem von Abgas A durchströmbaren Substrat aufgebaut, das an seiner Oberfläche Oxidationskatalysatormaterial aufweist. Abhängig von der Art der in Verbindung mit der Abgasanlage 12 eingesetzten Brennkraftmaschine kann dieses Oxidationskatalysatormaterial im Falle eines Diesel-Motors Dieseloxidationskatalysatormaterial oder im Falle eines Otto-Motors Dreiwegekatalysatormaterial sein.

Die Oxidationskatalysatoranordnung 26 umfasst optional an dem elektrisch erregbaren Heizelement 14 eine Oxidationskatalysatormaterialbeschichtung 30. Diese kann die Oberfläche des elektrisch erregbaren Heizelements im Wesentlichen vollständig oder auch nur teilweise bedecken und abhängig von der Art der Brennkraftmaschine und damit der Art des eingesetzten Kohlenwasserstoffs K beispielsweise ebenfalls Dieseloxidationskatalysatormaterial oder Dreiwegekatalysatormaterial umfassen.

Die bei dem katalytischen Heizer 10 verwendete Kohlenwasserstoff-Abgabeanordnung 20 kann beispielsweise einen den Kohlenwasserstoff K symmetrisch, also in Form eines gleichmäßigen Sprühkegels abgebenden Injektor umfassen, oder kann einen den abgegebenen Kohlenwasserstoff K asymmetrisch, also verstärkt zu einer Seite abgebenden Injektor umfassen. Alternativ zu der in Fig. 1 erkennbaren, bezüglich der Abgasströmungsrichtung geneigten Positionierung in einer im Wesentlichen geradlinig sich erstreckenden Abgasführungskomponente 18 könnte die Kohlenwasserstoff-Abgabeanordnung 20 auch in einem stromaufwärts des Heizelements 14 positionierten Bogenbereich der Abgasführungskomponente 18 positioniert sein, so dass die Haupt-Abgaberichtung der Kohlenwasserstoff-Abgabeanordnung 20 im Wesentlichen der Strömungsrichtung des Abgases A unmittelbar stromaufwärts des Heizelements 14 entspricht. Damit kann eine kompakte Bauart des katalytischen Heizers 10 bzw. einer damit aufgebauten Abgasanlage 12 erreicht werden.

Die Fig. 2 veranschaulicht die in Verbindung mit einer Brennkraftmaschine 32 eingesetzte Abgasanlage 12. Stromaufwärts des katalytischen Heizers 10 ist in der Abgasanlage 12 ein Abgasturbolader 34 vorgesehen. Stromabwärts des katalytischen Heizers 10 sind eine beispielsweise einen Dieseloxidationskatalysator 36 und einen Partikelfilter 38 umfassende erste Abgasbehandlungsbaugruppe 40 und eine beispielsweise einen SCR-Katalysator 42 mit zugeordnetem Injektor 44 umfassende zweite Abgasbehandlungsbaugruppe 46 vorgesehen. Eine derartige Ausgestaltung der beiden Abgasbehandlungsbaugruppen 44, 46 ist insbesondere in Verbindung mit einer als Diesel-Motor ausgebildeten Brennkraftmaschine 32 vorgesehen.

Bei ausreichend groß dimensioniertem Oxidationskatalysatorblock 24 des katalytischen Heizers 10 könnte beispielsweise auf den Dieseloxidationskatalysator 36 der ersten Abgasbehandlungsbaugruppe 40 verzichtet werden. Weiter kann ggf. stromaufwärts des katalytischen Heizers 10 bzw. stromabwärts des Abgasturboladers 34 eine dritte Abgasbehandlungsbaugruppe 48 vorgesehen sein, welche beispielsweise einen Vor-SCR-Katalysator 50 mit zugeordnetem Injektor 52 umfassen kann.

Die Fig. 2 zeigt weiter, dass vorteilhafterweise in Zuordnung zu dem katalytischen Heizer 10 ein zu diesem paralleler Bypass-Strömungsweg 54 vorgesehen sein kann, welcher durch ein diesem zugeordnetes Ventil 56 wahlweise zur Durchströmung freigegeben bzw. gegen Durchströmung abgesperrt werden kann. In einem Zustand, in welchem ein Betrieb des katalytischen Heizers 10 nicht erforderlich ist, kann der Bypass-Strömungsweg 54 zur Durchströmung freigegeben werden, so dass ein durch den katalytischen Heizers 10 eingeführter erhöhter Strömungswiderstand ausgeglichen werden kann. Bei zur Durchströmung freigegebenem Bypass-Strömungsweg 54 kann beispielsweise ein Großteil des von der Brennkraftmaschine 32 abgegebenen Abgases A durch diesen hindurchströmen.

Im Heizbetrieb des katalytischen Heizers 10 wird der Bypass-Strömungsweg 54 durch das Ventil 56 abgesperrt, so dass der gesamte Abgasstrom durch den katalytischen Heizer 10 geleitet wird und somit Wärme von dem katalytischen Heizer 10 auf stromabwärts folgende Systembereiche übertragen kann. Dabei kann auch vorgesehen sein, dass dann, wenn der Heizbetrieb des katalytischen Heizers 10 näherungsweise gleichzeitig mit dem Betriebsbeginn der Brennkraftmaschine 32 einsetzt, das Ventil 56 geöffnet wird, so dass ein größerer Teil des von der Brennkraftmaschine 32 ausgestoßenen Abgases A in einer Erwärmungsphase des Heizelements 14 durch den Bypass-Strömungsweg 54 strömt. Dadurch wird nur ein vergleichsweise geringer Teil der durch Erregung des Heizelements 14 generierten Wärme durch das Heizelement 14 umströmendes Abgas A abgetragen, was eine schnellere Erwärmung des Heizelements 14 und damit auch ein schnelleres Erreichen eines Zustandes, in welchem der Kohlenwasserstoff K an der Oberfläche des Heizelements 14 verdampft wird, zur Folge hat.

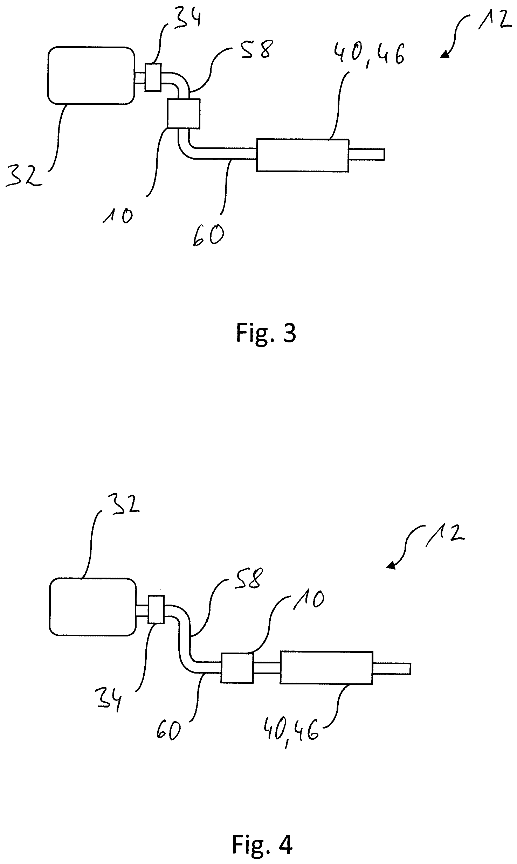

Die Fig. 3 und 4 veranschaulichen verschiedene Anordnungsoptionen für den katalytischen Heizer 10 in der Abgasanlage 12. Die Abgasanlage 12 kann grundsätzlich so aufgebaut sein, dass diese anschließend an die Brennkraftmaschine 32 bzw. den Abgasturbolader 34, einen allgemein als Down-Pipe bezeichneten Abgasanlagenabschnitt 58 aufweist, der von der Brennkraftmaschine 32 beispielsweise nach unten oder/und seitlich weg führt. An diesem nach unten oder/und zur Seite führenden Abgasanlagenabschnitt 58 kann ein sich beispielsweise unter dem Unterboden eines Fahrzeugs erstreckender Abschnitt 60 der Abgasanlage anschließen. Auch kann der Abschnitt 58 zu in einem seitlichen Bereich beispielsweise eines Lastkraftwagens positionierten Abgasbehandlungsbaugruppen führen.

In dem in Fig. 3 dargestellten Ausgestaltungsbeispiel ist der katalytische Heizer 10 in dem nach unten oder/und seitlich bezüglich der Brennkraftmaschine 32 sich erstreckenden Abschnitt 58 der Abgasanlage 12 positioniert. Somit wird dieser Bauraum effizient ausgenutzt. Der katalytische Heizer 10 ist somit sehr nahe an der Brennkraftmaschine 32 positioniert, so dass das diesen durchströmende und in nachfolgend beschriebener Art und Weise zusätzlich erhitzte Abgas A effizient zur Erwärmung von weiter stromabwärts positionierten Abgasbehandlungsbaugruppen beitragen kann.

Bei einer alternativen Ausgestaltung ist, beispielsweise wenn dafür kein Bauraum zur Verfügung steht, der katalytische Heizer 10 nicht in dem nach unten bzw. zur Seite führenden Abschnitt 58 der Abgasanlage 12, sondern in dem beispielsweise unter dem Unterboden eines Fahrzeugs oder in einem seitlichen Bereich eines Fahrzeugs positionierten Abschnitt 60 der Abgasanlage 12 positioniert.

Es ist darauf hinzuweisen, dass jede der in den Fig. 3 und 4 dargestellten Ausgestaltungsvarianten der Abgasanlage 12 in Verbindung mit den verschiedenen in Fig. 2 auch detaillierter dargestellten weiteren Systembereichen, also den verschiedenen Abgasbehandlungsbaugruppen 40, 46, 48 oder/und auch dem Bypass-Strömungsweg 54, vorgesehen sein kann.

Nachfolgend wird der Betrieb des katalytischen Heizers 10 in der Abgasanlage 12 zum beschleunigten Erwärmen der im Abgasströmungsweg folgenden Systembereiche, also insbesondere der Abgasbehandlungsbaugruppen 40, 46, erläutert.

Im Betrieb des katalytischen Heizers 10 wird durch das Erregen des Heizelements 14, also durch Anlegen einer elektrischen Spannung an dieses, und durch die dabei am Heizelement 14 generierte Wärme der in flüssiger Form auf das Heizelement 14 auftreffende Kohlenwasserstoff K erwärmt und dabei verdampft. Gleichzeitig wird primär durch Wärmestrahlung Wärme auf den stromaufwärtigen Endbereich des Oxidationskatalysatorblocks 24 übertragen und dieser auch bei ggf. noch nicht vorhandenem Abgasstrom erwärmt. Die Temperatur des Oxidationskatalysatorblocks 24 in dessen stromaufwärtigem Endbereich kann durch einen Temperatursensor 62 erfasst werden und in einer den katalytischen Heizer 10 ansteuernden Ansteuereinheit genutzt werden, um den katalytischen Heizer 10 und gegebenenfalls weitere Systembereiche der Abgasanlage 12 in Abhängigkeit von dieser Temperatur anzusteuern bzw. zu betreiben.

Der am Heizelement 14 erwärmte und verdampfte Kohlenwasserstoff K wird in nachfolgend detaillierter beschriebener Art und Weise in Richtung zum Oxidationskatalysatorblock 24 weitergetragen und kann an dessen Oberfläche mit in der Abgasanlage 12 auch vorhandenem Sauerstoff oxidiert werden. Bei dieser katalytischen Oxidationsreaktion wird Wärme freigesetzt, die zur weiteren Erwärmung des Oxidationskatalysatorblocks 26 und damit auch zur Erwärmung des diesen im Betrieb der Brennkraftmaschine 32 durchströmenden Abgases A beiträgt. Das Abgas A transportiert die am katalytischen Heizer 10 aufgenommene Wärme in Richtung stromabwärts zu den dann folgenden Abgasbehandlungsbaugruppen 40, 46 und überträgt zumindest einen Teil der Wärme auf diese. Damit werden die Abgasbehandlungsbaugruppen 40, 46 insbesondere in der Startphase des Arbeitsbetriebs der Brennkraftmaschine 32 schneller erwärmt, so dass die in diesen ggf. durchzuführenden katalytischen Reaktionen früher einsetzen können und somit die Zeitdauer, während welcher Abgas A im Wesentlichen unbehandelt ausgestoßen wird, deutlich verkürzt wird.

Ist an dem Heizelement 14 zusätzlich auch die Oxidationskatalysatormaterialbeschichtung 30 vorgesehen, kann bereits an dem Heizelement 14 zumindest ein Teil des auf dieses auftreffenden und durch dieses verdampften Kohlenwasserstoffs K in einer katalytischen Reaktion oxidiert werden. Auch dabei wird Wärme frei, die einerseits zu einer schnelleren und verstärkten Erwärmung des Heizelements 14 und andererseits zusätzlich auch einer schnelleren Erwärmung des Oxidationskatalysatorblocks 24 bzw. des in der Abgasanlage 12 strömenden Abgases A beiträgt.

Da mit einem derartigen katalytischen Heizer 10 das Abgas bzw. weiter stromabwärts folgende Systembereiche der Abgasanlage 12 nicht nur durch die durch elektrische Erregung des Heizelements 14 generierte Wärme erwärmt werden, sondern ein wesentlicher Teil der im Bereich des katalytischen Heizers 10 freigesetzten Wärmeenergie durch die katalytische Oxidationsreaktion des Kohlenwasserstoffs K bereitgestellt wird, kann bei deutlich vermindertem Einsatz elektrischer Energie eine wesentlich stärkere und schnellere Erwärmung der verschiedenen Systembereiche der Abgasanlage 12 erreicht werden. Dies gestattet es beispielsweise, das Heizelement 14 mit einer geringeren Betriebsspannung, beispielsweise einer in einem Bordspannungsnetz bereitgestellten Spannung von 24V, zu betreiben.

Nachfolgend werden verschiedene Betriebsweisen der Abgasanlage 12 bzw. des katalytischen Heizers 10 beschrieben, mit welchen für eine effiziente Erwärmung der für die Abgasreinigung in der Abgasanlage 12 vorhandenen Systembereiche, insbesondere der Abgasbehandlungsbaugruppen 40, 46, gesorgt werden kann.

Bei Inbetriebnahme eines Fahrzeugs bzw. der Brennkraftmaschine 32 kann auch begonnen werden, das Heizelement 14 zu erregen, also eine Spannung an dieses anzulegen, um im Bereich desselben Wärme zu generieren. Da mit dem Beginn des Betriebs der Brennkraftmaschine 32 auch das Abgeben von Abgas A aus dieser einsetzt, wird ein Teil der im Heizelement 14 generierten Wärme durch den Abgasstrom in Richtung stromabwärts zu dem Oxidationskatalysatorblock 24 getragen. Ein Teil der Wärme kann auch direkt durch Wärmestrahlung vom Heizelement 14 auf den stromaufwärtigen Endbereich des Oxidationskatalysatorblocks 24 übertragen werden.

Wird beispielsweise anhand des Ausgangssignals des Temperatursensors 62 erkannt, dass der Oxidationskatalysatorblock 24 eine für die Durchführung einer katalytischen Oxidation des Kohlenwasserstoffs K ausreichende Temperatur zumindest in seinem stromaufwärtigen Endbereich aufweist, welche bei beispielsweise 250° oder darüber liegen kann, kann mit dem Einspritzen von flüssigem Kohlenwasserstoff K in Richtung zu dem Heizelement 14 begonnen werden. Der flüssige Kohlenwasserstoff K wird an der Oberfläche des erwärmten Heizelements 14 verdampft und durch den Abgasstrom in Richtung zu dem Oxidationskatalysatorblock 24 transportiert. Am Oxidationskatalysatorblock 24 findet dann die Oxidation des Kohlenwasserstoffs K mit dem in diesem Zustand in der Abgasanlage 12 enthaltenen bzw. im Abgas A transportierten Sauerstoff statt. Bei dieser Oxidation wird Wärme freigesetzt, welche zusätzlich zu der durch die Erregung des Heizelements 14 freigesetzten Wärme nicht nur das dann weiter in Richtung stromabwärts strömende Abgas A erwärmt, sondern auch zu einer noch schnelleren Erwärmung des Oxidationskatalysatorblocks 24 insbesondere auch in Richtung zu dessen stromabwärtigem Bereich beiträgt. Dies hat zur Folge, dass vergleichsweise schnell nach dem Einsetzen der Oxidationsreaktion am Oxidationskatalysatorblock 24 der gesamte Oxidationskatalysatorblock 24 auf einer zur Durchführung einer katalytischen Oxidation des Kohlenwasserstoffs K erforderlichen Temperatur ist.

Um diese Temperatur noch früher zu erreichen bzw. noch früher zur Erwärmung des weiter stromabwärts liegende Systembereiche der Abgasanlage 12 erwärmenden Abgases A beitragen zu können, kann die Erregung des Heizelements 14 bereits auch beispielsweise 5 bis 20 Sekunden vor der Inbetriebnahme der Brennkraftmaschine 32 gestartet werden. Als Auslöser hierfür können Ereignisse in einem Fahrzeug genutzt werden, welche darauf hindeuten, dass mit größter Wahrscheinlichkeit die Brennkraftmaschine 32 in absehbarer Zeit in Betrieb genommen wird. Beispielsweise können das Entriegeln der Fahrzeugtüren oder das Einstecken eines Zündschlüssels in ein Zündschloss als derartige das Erregen des Heizelements 14 auslösende Ereignisse genutzt werden.

Die Einspritzung von Kohlenwasserstoff kann beispielsweise einsetzen, wenn das Heizelement eine ausreichend hohe Temperatur beispielsweise im Bereich von 200 bis 400 °C, vorzugsweise mindestens 350 °C erreicht hat. Diese Temperatur kann entweder durch einen dem Heizelement 14 zugeordneten Temperatursensor erfasst werden oder empirisch bestimmt und mit einer Zeitdauer ab dem Beginn der Erregung des Heizelements 14 verknüpft werden, so dass mit dem Einspritzen von Kohlenwasserstoff eine vorbestimmte Zeitdauer ab dem Beginn des Erregers des Heizelements 14 begonnen werden kann. Setzt die Erregung des Heizelements 14 bereits vor dem Beginn des Betriebs der Brennkraftmaschine 32 ein, kann aufgrund des in dieser Phase noch nicht vorhandenen Abgasstroms eine noch schnellere Erwärmung des Heizelements 14 auf die gewünschte Temperatur erreicht werden.

Weist das Heizelement 14 die Oxidationskatalysatormaterialbeschichtung 30 auf, so kann gleichermaßen die Erregung des Heizelements 14 mit Inbetriebnahme der Brennkraftmaschine 32 oder bereits kurze Zeit davor gestartet werden, und das Einspritzen von Kohlenwasserstoff K kann mit der Inbetriebnahme der Brennkraftmaschine 32 gestartet werden. Da bei derartiger Ausgestaltung des Heizelements 14 mit der Oxidationskatalysatormaterialbeschichtung 30 darauf ein Teil des an dem Heizelement 14 erwärmten und auch verdampften Kohlenwasserstoffs K bereits an der Oxidationskatalysatormaterialbeschichtung 30 oxidiert wird, erwärmt sich das Heizelement 14 schneller und wird eine größere Wärmemenge bereitgestellt, die durch Wärmestrahlung und Konvektion auf den Oxidationskatalysatorblock 24 übertragen wird. Auch das ab Beginn des Betriebs der Brennkraftmaschine 32 in der Abgasanlage 12 strömende Abgas A kann im Bereich des Heizelements 14 bereits verstärkt Wärme aufnehmen und diese auch in den Bereich der weiter stromabwärts folgenden Systembereiche der Abgasanlage 12 transportieren.

Die verstärkte Erzeugung von Wärme im Bereich des Heizelements 14 führt somit neben einer stärkeren Verdampfung des flüssigen Kohlenwasserstoffs K zu einer schnelleren Erwärmung aller stromabwärts folgenden Systembereiche, so dass der Oxidationskatalysatorblock 24 schneller seine maximale Kapazität zur katalytischen Oxidation von Kohlenwasserstoff K erreicht und auch die in der Abgasanlage 12 weiter stromabwärts folgenden Systembereiche schneller ihre für die Erfüllung der jeweiligen Abgasreinigungsfunktion erforderliche Betriebstemperatur erreichen.

Bei einer weiteren alternativen Vorgehensweise kann sowohl das Erregen des Heizelements 14, als auch das Einspritzen des Kohlenwasserstoffs K bereits vor dem Beginn des Betriebs der Brennkraftmaschine 32 erfolgen. Beispielsweise kann zunächst bei noch nicht in Betrieb gesetzter Brennkraftmaschine 32 das mit der Oxidationskatalysatormaterialbeschichtung 30 versehene Heizelement 14 erregt werden, bis dieses eine Solltemperatur im Bereich von wenigstens 300°C, vorzugsweise wenigstens 400°C, erreicht. Diese Temperatur kann sensorisch erfasst werden oder in Verbindung mit einer empirisch zu bestimmenden Zeitdauer festgelegt werden, wobei unterstellt wird, dass nach einer von der Bauart des Heizelements 14 abhängigen Zeitdauer von beispielsweise 5 bis 20 Sekunden diese Temperatur vorliegt. Diese Zeitdauer kann vergleichsweise kurz sein, da in dieser Phase kein Abgas in der Abgasanlage 12 strömt.

Nach Erreichen der gewünschten Temperatur bzw. Ablauf der vorgegebenen Zeitdauer kann eine vorbestimmte Kraftstoffmenge auf das Heizelement 14 bzw. die Oxidationskatalysatormaterialbeschichtung 30 gespritzt werden. Der flüssige Kohlenwasserstoff K wird an der Oberfläche des Heizelements 14 bzw. der Oxidationskatalysatormaterialbeschichtung 30 erwärmt, ggf. verdampft und mit dem in der Abgasanlage 12 in der Umgebung des Heizelements 14 vorhandenen Sauerstoff oxidiert. Bei dieser Oxidation wird im Vergleich zu der durch die Erregung des Heizelements 14 freigesetzten Wärme eine vergleichsweise große Wärmemenge freigesetzt, welche zu einer verstärkten Erwärmung des Heizelements 14 selbst und bereits auch einer Erwärmung des stromaufwärtigen Bereichs des Oxidationskatalysatormaterialblocks 24 primär durch Wärmestrahlung führt. Das Heizelement 14 kann in dieser Phase eine Temperatur von 600°C bis 800°C erreichen.

Nachfolgend kann die Brennkraftmaschine 32 in Betrieb gesetzt werden und das Einspritzen von Kohlenwasserstoff K fortgesetzt werden, so dass mit dem dann ebenfalls einsetzenden Abgasstrom einerseits Wärme aus dem Bereich des Heizelements 14 in Richtung stromabwärts, insbesondere auch zum Oxidationskatalysatorblock 24, transportiert wird und von dem in der Abgasanlage 12 strömenden Abgas A verdampfter Kohlenwasserstoff K in den Bereich des Oxidationskatalysatorblocks 24 transportiert wird, in welchem dann zunächst zumindest am stromaufwärtigen und bereits erwärmten Bereich desselben ebenfalls eine katalytische Oxidation des verdampften Kohlenwasserstoffs K erfolgen kann. Mit der Inbetriebnahme der Brennkraftmaschine 12 und dem Einsetzen des Abgasstroms kann beispielsweise auch die Menge des eingespritzten Kohlenwasserstoffs K erhöht werden, da dann die vollständige Umsetzung des Kohlenwasserstoffs K nicht nur an der Oxidationskatalysatormaterialbeschichtung 30, sondern auch bzw. primär an der Oberfläche des Oxidationskatalysatorblocks 24 erfolgen wird. Die am Oxidationskatalysatorblock 24 dann einsetzende Oxidation des Kohlenwasserstoffs K führt zu einer vergleichsweise schnellen Erwärmung des Oxidationskatalysatorblocks 24 auch in dessen stromabwärtigem Endbereich, so dass die Zeitdauer bis zum Erreichen der maximalen Oxidationskapazität des Oxidationskatalysatorblocks 24 durch die bereits vor Inbetriebnahme der Brennkraftmaschine 32 einsetzende Einspritzung von Kohlenwasserstoff K weiter verkürzt werden kann.

Das Einspritzen von flüssigem Kohlenwasserstoff K bereits vor Inbetriebnahme der Brennkraftmaschine 12 kann auch genutzt werden, um im Rahmen einer oder mehrerer Piloteinspritzungen die Temperatur insbesondere im Bereich des Heizelements 14 und im stromaufwärtigen Bereich des Oxidationskatalysatorblocks 24 schneller auf die gewünschte Temperatur anzuheben.

Dabei kann zunächst nach dem Erregen des Heizelements 14 und dem Erwärmen desselben auf eine Temperatur von wenigstens 300°C, vorzugsweise wenigstens 400°C, in einem Vor-Einspritzvorgang Kohlenwasserstoff K in Richtung auf das Erwärmte Heizelement 14 bzw. die entsprechend erwärmte Oxidationskatalysatormaterialbeschichtung 30 eingespritzt werden. Der Kohlenwasserstoff K wird beim Auftreffen auf das Heizelement 14 bzw. die Oberfläche der Oxidationskatalysatormaterialbeschichtung 30 erwärmt, ggf. verdampft und in einer katalytischen Reaktion mit dem in diesem Bereich der Abgasanlage 12 vorhandenen Sauerstoff oxidiert. Die dabei entstehende Wärme trägt zur stärkeren und schnelleren Erwärmung des Heizelements 14 bzw. auch des stromaufwärtigen Bereichs des Oxidationskatalysatorblocks 24 bei. Nach dem Beenden dieses Vor-Einspritzvorgangs und der im Wesentlichen vollständigen katalytischen Oxidation des eingespritzten Kohlenwasserstoffs k wird die Brennkraftmaschine 32 durch einen Anlasser, einen Starter/Generator und dergleichen zur Drehung angetrieben, ohne dass dabei in den Zylindern derselben eine Zündung erfolgt. Durch die bei dieser Drehung der Kurbelwelle der Brennkraftmaschine 12 bewegten Kolben wird aus den Zylindern der Brennkraftmaschine 32 Luft und damit Sauerstoff in Richtung zum stromaufwärtigen Bereich der Abgasanlage 12 ausgestoßen, also in denjenigen Bereich, in welchem auch der katalytische Heizer 10 positioniert ist. Somit wird sichergestellt, dass für einen weiteren Vor-Einspritzvorgang wieder ausreichend Sauerstoff zur Verfügung steht, um den im Rahmen dieses weiteren Vor-Einspritzvorgangs eingespritzten Kohlenwasserstoff K vollständig oxidieren zu können.

Je nach Länge der zur Durchführung derartiger Vor-Einspritzvorgänge zur Verfügung stehenden Zeitdauer kann dieser Vorgang des alternierenden Einspritzens von Kohlenwasserstoff K und Drehens der Brennkraftmaschine 32 mehrfach wiederholt werden.

Die Brennkraftmaschine 32 kann dann gestartet werden, nachdem ein letzter Vor-Einspritzvorgang durchgeführt wurde und die Einspritzung von Kohlenwasserstoff K beendet wurde. Alternativ kann die Brennkraftmaschine 32 bereits auch im Verlaufe der Durchführung des letzten Vor-Einspritzvorgangs gestartet werden. Mit der Beendigung des letzten Vor-Einspritzvorgangs kann bei bereits ausreichender Erwärmung der stromabwärtigen Systembereiche der Abgasanlage 12 das Einspritzen von Kohlenwasserstoff K eingestellt werden. Da im Allgemeinen aber davon auszugehen ist, dass durch die Piloteinspritzungen die gesamte Abgasanlage 12 nicht ausreichend erwärmt wird, kann es erforderlich sein, nach Durchführung des letzten Vor-Einspritzvorgangs oder ggf. diesen unmittelbar fortsetzend Kohlenwasserstoff K einzuspritzen und die bei der katalytischen Oxidation am Oxidationskatalysatorblock 24 bzw. auch an der Oxidationskatalysatormaterialbeschichtung 30 freigesetzte Wärme mit dem Abgas A zu den thermisch zu konditionierenden Systembereichen in weiter stromabwärts folgenden Bereichen der Abgasanlage 12 zu transportieren.

Das Ausmaß der im Rahmen derartiger Piloteinspritzungen durchzuführenden Drehung der Kurbelwelle der Brennkraftmaschine 32 hängt primär davon ab, wie viele Zylinder dieser hat bzw. wie groß das Volumen der Zylinder ist. Das Ausmaß der Drehung ist auf die Menge des im Rahmen der jeweiligen Vor-Einspritzvorgänge einzuspritzenden Kohlenwasserstoffs K so abzustimmen, dass gewährleistet ist, dass in der Abgasanlage 12 und insbesondere in der Umgebung des Heizelements 14 ausreichend Sauerstoff zur vollständigen Oxidation des bei den Vor-Einspritzvorgängen eingespritzten Kohlenwasserstoffs K zur Verfügung steht.

Für den Start derartiger Piloteinspritzungen können den alsbaldigen Betriebsbeginn der Brennkraftmaschine 32 indizierende Ereignisse genutzt werden. Beispielsweise kann auf ein das Öffnen der Fahrzeugtüren indizierendes Signal zugegriffen werden. Alternativ oder zusätzlich ist es auch möglich, dass ein Fahrzeugnutzer, ähnlich wie dies im Zusammenhang mit Standheizungen praktiziert wird, einen Zeitpunkt für die geplante Inbetriebnahme des Fahrzeugs vorgibt, so dass beispielsweise auch abhängig von der Umgebungstemperatur und daher auch der Temperatur der verschiedenen thermisch zu konditionierenden Systembereiche der Abgasanlage 12, eine ausreichende Zeitdauer vor der geplanten Nutzungsaufnahme des Fahrzeugs mit den Piloteinspritzungen begonnen werden kann. Somit ist gewährleistet, dass mit der Inbetriebnahme der Brennkraftmaschine 32 der Oxidationskatalysatorblock 24 bereits ausreichend erwärmt ist, um bei der mit der Inbetriebnahme der Brennkraftmaschine 32 dann einsetzenden bzw. fortgesetzten Einspritzung von Kohlenwasserstoff eine effiziente katalytische Oxidation und daher auch eine effiziente Freisetzung von Wärme erreichen zu können.

Die bei bzw. nach Erregung des Heizelements 14 einzuspritzende Kohlenwasserstoffmenge kann in Abhängigkeit von verschiedenen Parametern eingestellt werden. Für die katalytische Umsetzung des Kohlenwasserstoffs K wesentliche Parameter sind beispielsweise die Temperatur des Oxidationskatalysatorblocks 24 und der Abgasvolumenstrom, also die Menge des pro Zeiteinheit den Oxidationskatalysatorblock 24 durchströmenden und verdampften Kohlenwasserstoff K mit sich führenden Abgases A. Je höher die Temperatur des Oxidationskatalysatorblocks 24 insbesondere auch im stromabwärtigen Endbereich desselben ist, desto effizienter kann dieser den auf dessen Oberfläche auftreffenden Kohlenwasserstoff K oxidieren. Dies bedeutet, dass die Kohlenwasserstoff-Einspritzrate mit zunehmender Temperatur des Oxidationskatalysatorblocks 24 beispielsweise bis zu einem Maximalwert der Kohlenwasserstoff-Einspritzrate erhöht werden kann. Ein größerer Abgasvolumenstrom, also eine größere pro Zeiteinheit durch den Oxidationskatalysatorblock 24 hindurchströmende Abgasmenge, hat zur Folge, dass die Verweilzeit des im Abgas A transportierten Kohlenwasserstoffs K in dem Oxidationskatalysatorblock 24 entsprechend kürzer ist. Um das Ausstoßen von nicht oxidiertem Kohlenwasserstoff K zu vermeiden, kann vorgesehen sein, dass mit zunehmendem Abgasvolumenstrom die Kohlenwasserstoff-Einspritzrate beispielsweise bis zu einem Minimalwert abnimmt.

Unter Berücksichtigung derartiger Einflussgrößen, wie z. B. der Temperatur des Oxidationskatalysatorblocks 24 und des Abgasvolumenstroms, aber beispielsweise auch der Abgastemperatur, der Solltemperatur, welches das Abgas nach dem Durchströmen des Oxidationskatalysatorblocks 24 haben soll, der elektrischen Heizleistung des Heizelements 14 kann ein Kennfeld definiert werden, welches in Abhängigkeit von derartigen Eingangsgrößen die Kohlenwasserstoff-Einspritzrate derart vorgibt, dass einerseits eine maximale Wärmemenge freigesetzt werden kann und andererseits das Ausstoßen von nicht oxidiertem Kohlenwasserstoff K vermieden wird.

## Patentansprüche

1. Katalytischer Heizer für eine Abgasanlage einer Brennkraftmaschine, umfassend:
- wenigstens ein elektrisch erregbares Heizelement (14),
- eine Kohlenwasserstoff-Abgabeanordnung (20) zur Abgabe von flüssigem Kohlenwasserstoff (K) auf das wenigstens eine elektrisch erregbare Heizelement (14) zu,
- eine Oxidationskatalysatoranordnung (26) zur Oxidation von an dem wenigstens einen elektrisch erregbaren Heizelement (14) erwärmtem Kohlenwasserstoff (K).

2. Katalytischer Heizer nach Anspruch 1,
**dadurch gekennzeichnet,**
**dass** die Oxidationskatalysatoranordnung (26) einen an einer Abströmseite (23) des wenigstens einen elektrisch erregbaren Heizelements (14) angeordneten Oxidationskatalysatorblock (24) zur Aufnahme und Oxidation von an dem wenigstens einen elektrisch erregbaren Heizelement (14) verdampftem Kohlenwasserstoff (K) umfasst,
oder/und
**dass** die Oxidationskatalysatoranordnung (26) eine Oxidationskatalysatormaterialbeschichtung (30) des wenigstens einen elektrisch erregbaren Heizelements (14) umfasst.

3. Abgasanlage für eine Brennkraftmaschine, umfassend wenigstens eine Abgasbehandlungsbaugruppe (40, 46) und bezüglich einer Abgasströmungsrichtung stromaufwärts der wenigstens einen Abgasbehandlungsbaugruppe (40, 46) einen katalytischen Heizer (10) nach Anspruch 1 oder 2,
vorzugsweise wobei die wenigstens eine Abgasbehandlungsbaugruppe (40, 46) eine erste Abgasbehandlungsbaugruppe (40) mit einem Oxidationskatalysator (36) oder/und einem Partikelfilter (38) umfasst.

4. Abgasanlage nach Anspruch 3,
**dadurch gekennzeichnet, dass** die wenigstens eine Abgasbehandlungsbaugruppe (40, 46) eine zweite Abgasbehandlungsbaugruppe (46) mit einem SCR-Katalysator (42) umfasst.

5. Abgasanlage nach Anspruch 3 und Anspruch 4,
**dadurch gekennzeichnet, dass** die erste Abgasbehandlungsbaugruppe (40) in der Abgasströmungsrichtung stromaufwärts bezüglich der zweiten Abgasbehandlungsbaugruppe (46) angeordnet ist.

6. Abgasanlage nach einem der Ansprüche 3-5
**dadurch gekennzeichnet, dass** der katalytische Heizer (10) in der Abgasströmungsrichtung stromabwärts eines Abgasturboladers (34) oder/und einer dritten Abgasbehandlungsbaugruppe (48) angeordnet ist, vorzugsweise wobei die dritte Abgasbehandlungsbaugruppe (48) einen SCR-Katalysator (50) umfasst.

7. Abgasanlage nach einem der Ansprüche 3-6,
**dadurch gekennzeichnet, dass** parallel zu dem katalytischen Heizer (10) ein wahlweise absperrbarer Bypass-Strömungsweg (54) vorgesehen ist.

8. Abgasanlage nach einem der Ansprüche 3-7,
**dadurch gekennzeichnet, dass**:
- der katalytische Heizer (10) in einem von einer Brennkraftmaschine (32) in einer Höhenrichtung nach unten oder/und seitlich weg verlaufend zu positionierenden Abgasanlagenabschnitt (58) angeordnet ist,
oder
- der katalytische Heizer (10) in einem unter einem Unterboden eines Fahrzeugs verlaufend oder in einem seitlichen Bereich eines Fahrzeugs zu positionierenden Abgasanlagenabschnitt (60) angeordnet ist.

9. Verfahren zum Betreiben einer Abgasanlage nach einem der Ansprüche 3-8, bei welchem Verfahren das wenigstens eine elektrisch erregbare Heizelement (14) des katalytischen Heizers (10) derart betrieben wird, dass auf eine Oberfläche des wenigstens einen elektrisch erregbaren Heizelements (14) auftreffender flüssiger Kohlenwasserstoff (K) erwärmt wird und an der Oxidationskatalysatoranordnung (26) zur Erzeugung von Wärme oxidiert wird.

10. Verfahren nach Anspruch 9,
**dadurch gekennzeichnet, dass** dann, wenn nach dem Beginn des Erregens des wenigstens einen elektrisch erregbaren Heizelements (14) die Oxidationskatalysatoranordnung (26) eine vorbestimmte Temperatur, vorzugsweise eine die katalytische Oxidation von Kohlenwasserstoff (K) an der Oxidationskatalysatoranordnung (26) zulassende Temperatur, aufweist oder/und seit dem Beginn des Erregens des wenigstens einen elektrisch erregbaren Heizelements (14) eine vorbestimmte Zeitdauer vergangen ist, das Einspritzen von Kohlenwasserstoff (K) auf das wenigstens eine elektrisch erregbare Heizelement (14) zu gestartet wird.

11. Verfahren nach Anspruch 9 oder 10,
**dadurch gekennzeichnet, dass** das Erregen des wenigstens einen elektrisch erregbaren Heizelements (14) vor Inbetriebnahme einer Brennkraftmaschine (32) gestartet wird,
vorzugsweise wobei das Einspritzen von Kohlenwasserstoff (K) auf das wenigstens eine elektrisch erregbare Heizelement (14) mit oder nach der Inbetriebnahme der Brennkraftmaschine (32) gestartet wird.

12. Verfahren nach Anspruch 11 in Verbindung mit Anspruch 2,
**dadurch gekennzeichnet, dass** das Einspritzen von Kohlenwasserstoff (K) auf das wenigstens eine elektrisch erregbare Heizelement (14) vor der Inbetriebnahme der Brennkraftmaschine (32) gestartet wird.

13. Verfahren nach Anspruch 12,
**dadurch gekennzeichnet, dass**:
a) vor der Inbetriebnahme der Brennkraftmaschine (32) in einem Vor-Einspritzvorgang Kohlenwasserstoff (K) mit einer vorbestimmten Menge oder/und für eine vorbestimmte Zeitdauer eingespritzt wird,
b) nach Beenden des Vor-Einspritzvorgangs die Brennkraftmaschine (32) ohne Zündung zur Drehung angetrieben wird,
c) vor der Inbetriebnahme der Brennkraftmaschine (32) in einem letzten Vor-Einspritzvorgang Kohlenwasserstoff (K) mit einer vorbestimmten Menge oder/und für eine vorbestimmte Zeitdauer eingespritzt wird.

14. Verfahren nach Anspruch 13,
**dadurch gekennzeichnet, dass** vor Durchführung der Maßnahme c) die Maßnahmen a) und b) wenigstens einmal wiederholt werden, oder/und dass nach oder während der Durchführung der Maßnahme c) die Brennkraftmaschine (32) in Betrieb genommen wird,
vorzugsweise wobei:
- mit der Beendigung der Maßnahme c) das Einspritzen von Kohlenwasserstoff (K) beendet wird,
oder
- nach der Beendigung der Maßnahme c) und nach der Inbetriebnahme der Brennkraftmaschine (32) das Einspritzen von Kohlenwasserstoff (K) wieder aufgenommen oder fortgesetzt wird.

15. Verfahren nach einem der Ansprüche 9-14,
**dadurch gekennzeichnet, dass** nach der Inbetriebnahme der Brennkraftmaschine (32) die Kohlenwasserstoff-Einspritzrate in Abhängigkeit einer Temperatur der Oxidationskatalysatoranordnung (26) oder/und in Abhängigkeit eines Abgasvolumenstroms in der Abgasanlage (12) bestimmt wird, vorzugsweise wobei mit zunehmender Temperatur der Oxidationskatalysatoranordnung (26) die Kohlenwasserstoff-Einspritzrate zunimmt, oder/und dass mit zunehmendem Abgasvolumenstrom die Kohlenwasserstoff-Einspritzrate abnimmt.
